# FASCICULE DE BREVET EUROPEEN

(11) **EP 3 342 640 B1**
(45) Date de publication et mention de la délivrance du brevet: **01.01.2025**
(21) Numéro de dépôt: 17208031.9
(22) Date de dépôt: 18.12.2017
(51) Int. Cl.: B60Q 1/26, B60Q 1/30, B60Q 1/52, H04N 13/00, G06F 3/14, G02B 27/30, G02B 27/42, H04W 4/02, H04W 84/00, G02B 6/124, F21V 8/00, G02B 5/18, G03H 1/22, F21S 43/13, F21S 43/20, F21S 43/239, F21S 43/245, G02B 30/56, G03H 1/30, G09G 3/00, B60Q 1/50

(54) **SYSTÈME D AVERTISSEMENT LUMINEUX POUR VÉHICULE AUTOMOBILE ET PROCÉDÉ D AVERTISSEMENT LUMINEUX**
WARNLEUCHTSYSTEM FÜR KRAFTFAHRZEUG, UND WARNLEUCHTVERFAHREN
LIGHT WARNING SYSTEM FOR A MOTOR VEHICLE AND LIGHT WARNING METHOD

(30) Priorité: 03.01.2017 FR 1750030
(43) Date de publication de la demande: 04.07.2018
(73) Titulaire: Valeo Vision, 93012 Bobigny Cedex (FR)
(72) Inventeur: BOILEVIN, Antoine, 93012 Bobigny Cedex (FR); GOSSELE, Frederic, 93012 Bobigny Cedex (FR); SANCHEZ, Vanesa, 93012 Bobigny Cedex (FR); FLEURY, Benoist, 93012 Bobigny Cedex (FR); LIARD, Laurent, 93012 Bobigny Cedex (FR); LEBLANC, Francois, 93012 Bobigny Cedex (FR)
(74) Mandataire: Valeo Visibility

(56) Documents cités:
- EP-B1- 2 153 117
- WO-A1-2013/180725
- WO-A1-2013/180737
- WO-A1-2014/106584
- WO-A1-2016/202940
- FR-A1- 3 005 011
- US-A1- 2013 327 966

## Description

### Domaine technique

La présente invention concerne un système d'avertissement lumineux pour véhicule automobile, et plus particulièrement un système comportant une détection d'un autre véhicule automobile au voisinage dudit véhicule automobile. L'invention concerne aussi un procédé d'avertissement lumineux.

### État de la technique antérieure

On connait des systèmes d'affichage permettant de projeter des informations lumineuses et/ou des pictogrammes sur une partie d'une scène de route afin d'aider par exemple le conducteur du véhicule automobile à suivre un itinéraire prédéfini. Ces systèmes d'affichage nécessitent cependant l'existence d'un espace de projection suffisant autour du véhicule afin de projeter cette information lumineuse sur la scène de route par exemple.

On connait aussi des systèmes d'affichage qui affichent des pictogrammes lumineux sur des surfaces optiques prédéfinies. Les dimensions de ces surfaces lumineuses sont généralement assez réduites et contraintes notamment par les dimensions des systèmes d'affichage dans lesquels ils sont embarqués, tels que par exemple au niveau des feux arrières et/ou des feux de signalisation. Ces systèmes d'affichage ne permettent pas ainsi de projeter des informations lumineuses complexes et/ou étendues et/ou parfaitement visibles dans toutes les situations de conduites, et notamment entre plusieurs véhicules

De manière plus particulière, il apparait un besoin d'augmenter les capacités d'affichage d'information lumineuses entre plusieurs véhicules afin d'améliorer la sécurité en situation de conduite.

Le document US2013/327966 A1 décrit l'utilisation d'un affichage stéréoscopique permettant de générer, visible seulement à une distance de sécurité derrière le véhicule, un avertissement lumineux au contenu invariable pour indiquer à un véhicule suiveur qu'il est trop proche.

Le document EP 2 153 117 B1 décrit un système d'avertissement lumineux utilisant des hologrammes pour afficher une image dont le contenu est variable en fonction d'une distance intervéhiculaire.

Le document WO 2013/180737 A1 décrit un système d'affichage stéréoscopique.

La présente invention a pour objet de répondre au moins en grande partie aux problèmes précédents et de conduire en outre à d'autres avantages.

Un autre but de l'invention est de proposer un nouveau système d'avertissement lumineux pour véhicule automobile afin de résoudre au moins un de ces problèmes.

Un autre but de l'invention est d'augmenter les capacités d'affichage d'informations lumineuses visibles depuis l'extérieurs du véhicule automobile.

Un autre but de la présente invention est de faciliter l'intégration d'un système d'avertissement lumineux sur des parois extérieures d'un véhicule automobile.

### Exposé de l'invention

Selon un premier aspect de l'invention, on atteint au moins l'un des objectifs précités avec un système d'avertissement lumineux pour un véhicule automobile tel que défini dans la revendication 1.

Ainsi le système d'avertissement conforme au premier aspect de l'invention permet de détecter un véhicule automobile secondaire situé à proximité du véhicule automobile principal et, en fonction de la distance du véhicule automobile secondaire, d'afficher une image stéréoscopique sur une surface d'affichage du véhicule automobile principal afin d'informer le véhicule automobile secondaire, par exemple sur un élément de la scène de route qu'il ne perçoit pas encore, ou encore par rapport à une dangerosité liée à la distance séparant le véhicule automobile secondaire du véhicule automobile principal.

Par véhicule situé à proximité, on entend un véhicule situé dans le périmètre de détection du système de détection. Ce périmètre de détection dépend notamment de la technologie mise en œuvre par le système de détection. À titre d'exemple non limitatif, le périmètre de détection s'étend jusqu'à plusieurs mètres au-delà du véhicule automobile principal, et préférentiellement jusqu'à environ 10 m, préférentiellement encore selon au moins une direction perpendiculaire à un côté du véhicule automobile principal et/ou de manière radiale audit véhicule automobile principal. Le système de détection peut notamment être un système actif, comportant un émetteur et un récepteur configurés pour analyser la déviation des rayons émis le système de détection, ou bien être un système passif comportant uniquement un récepteur.

Ainsi, le système d'avertissement lumineux conforme au premier aspect de l'invention permet d'augmenter les capacités d'affichage d'informations lumineuses visibles depuis l'extérieur du véhicule automobile principal - et notamment visibles par d'autres véhicules automobiles - afin d'améliorer la sécurité en situation de conduite.

Le système d'avertissement lumineux conforme au premier aspect de l'invention comprend les caractéristiques suivantes :
- le dispositif lumineux comprend (i) au moins une source de lumière configurée pour pouvoir émettre au moins un rayon lumineux, et (ii) au moins une cellule lumineuse, chaque cellule lumineuse comprenant :
   - un guide d'onde agencé pour transporter au moins une partie de l'au moins un rayon lumineux émis par la source de lumière correspondante entre une première extrémité située du côté de la source de lumière et une deuxième extrémité ;
   - au moins un réseau de diffraction situé au niveau de la deuxième extrémité du guide d'onde, au moins une partie des réseaux de diffraction étant éclairée par l'au moins une partie des rayons lumineux transportés par le guide d'onde afin de générer au moins un lobe de diffraction. Ainsi, chaque réseau de diffraction éclairé génère un lobe de diffraction dans une direction particulière, et tous les réseaux de diffraction d'une cellule lumineuse forment collectivement un pixel lumineux. Finalement, la superposition et/ou l'adjonction de plusieurs cellules lumineuses permettent ainsi de former des images stéréoscopiques formées par la pluralité des pixels lumineux générés par chaque cellule lumineuse éclairée ;

Le système d'avertissement lumineux conforme au premier aspect de l'invention peut comprendre avantageusement au moins un des perfectionnements ci-dessous, les caractéristiques techniques formant ces perfectionnements pouvant être prises seules ou en combinaison :
- le dispositif lumineux comprend un collimateur agencé pour coupler optiquement l'au moins une source de lumière avec le guide d'onde. Plus particulièrement, le collimateur comprend au moins une lentille convergente afin de rendre parallèle au moins une partie des rayons lumineux émis par la source de lumière correspondante et afin de faciliter leur injection dans le guide d'onde ;
- un premier réseau de diffraction a des premières caractéristiques dimensionnelles et un deuxième réseau de diffraction a des deuxièmes caractéristiques dimensionnelles différentes des premières caractéristiques dimensionnelles afin de générer des lobes de diffraction différents lorsqu'ils sont éclairés par l'au moins un rayon lumineux. Les caractéristiques dimensionnelles des réseaux de diffraction comprennent notamment la forme générale dudit réseau de diffraction, la forme des « créneaux » formant ledit réseau de diffraction, les différentes dimensions du réseau de diffraction et/ou les différentes dimensions des « créneaux » formant ledit réseau de diffraction ainsi que la distance entre deux « créneaux » directement adjacents. De manière connue, les motifs dimensionnels formant chaque réseau de diffraction représentent une « gravure stéréoscopique » d'une image interférentielle qui, lorsqu'elle est éclairée par une lumière particulière, génère le lobe de diffraction correspondant. La lumière éclairant les réseaux de diffraction est préférentiellement du type d'une lumière cohérente. Ainsi, chaque réseau de diffraction est agencé pour générer un lobe de diffraction correspondant lorsqu'il est soumis à un éclairage incident, de manière connue par l'homme du métier. En particulier, les différents réseaux de diffraction d'une cellule lumineuse du dispositif lumineux sont agencés pour former collectivement un pixel lumineux à partir de chaque lobe de diffraction. Et le contrôle de tout ou partie des cellules lumineuses du dispositif lumineux permet de générer des images stéréoscopiques à partir de chaque pixels lumineux produits par chaque cellule lumineuse. Un contrôle de chaque cellule lumineuse, indépendamment des autres cellules lumineuses du dispositif lumineux, permet de générer plusieurs images stéréoscopiques. En particulier, il est possible de générer des séquences animées d'images stéréoscopiques à partir des pixels lumineux de chaque cellule lumineuse. De manière avantageuse, les réseaux de diffractions comprennent des motifs géométriques permettant d'afficher une image stéréoscopique représentative de la distance séparant le véhicule automobile de l'obstacle détecté ;
- le premier réseau de diffraction et le deuxième réseau de diffraction sont orientés suivant des directions différentes, et notamment l'un par rapport à l'autre. Par orientation, on entend une direction d'orientation principale des motifs dimensionnels du réseau de diffraction correspondant. En d'autres termes, il s'agit de la direction formée par lesdits créneaux et/ou la direction sensiblement perpendiculaire à la direction de répétition des motifs géométriques formant ledit réseau de diffraction ;

- un angle entre les orientations de deux groupes de réseaux de diffraction adjacents est constant ;
- la surface d'affichage comprend un substrat transparent :
- le guide d'onde d'au moins une partie des cellules lumineuses du dispositif lumineux est au moins partiellement fixé solidairement sur le substrat transparent ;
- le guide d'onde d'au moins une partie des cellules lumineuses du dispositif lumineux est fixé par collage sur le substrat transparent, préférentiellement à l'aide d'une colle transparente. Alternativement, le guide d'onde d'au moins une partie des cellules lumineuses du dispositif lumineux est fixé par lamination sur le substrat transparent ;
- le substrat transparent est formé au moins en partie par le guide d'onde d'au moins une des cellules lumineuses du dispositif lumineux ;
- l'au moins une source de lumière est du type d'une source laser ou d'une diode électroluminescente. Éventuellement, le dispositif lumineux comprend plusieurs sources de lumière émettant chacune des rayons lumineux à des longueurs d'ondes différentes ;
- l'au moins une source de lumière est du type d'une diode laser ;
- l'au moins une source de lumière comprend une première source de lumière émettant au moins un rayon lumineux d'une première couleur, par exemple rouge, une deuxième source de lumière émettant au moins un rayon lumineux d'une deuxième couleur, par exemple verte, et une troisième source de lumière émettant au moins un rayon lumineux d'une troisième couleur, par exemple bleu. D'une manière plus générale, les première, deuxième et troisième sources de lumière peuvent prendre n'importe quelle couleur ; en d'autres termes, chaque source de lumière peut émettre une lumière de n'importe quelle longueur d'onde visible.
- le dispositif lumineux comprend un moyen de multiplexage optique agencé pour éclairer sélectivement chaque réseau de diffraction de chaque cellule lumineuse. Le moyen de multiplexage optique permet d'orienter au moins une partie des rayons lumineux générés par l'au moins une source de lumière vers au moins une partie des réseaux de diffraction d'une ou plusieurs cellules lumineuses. Alternativement, le moyen de multiplexage optique est agencé pour éclairer sélectivement chaque groupe de réseaux de diffraction, tous les réseaux de diffraction étant collectivement adressés par le moyen de multiplexage optique.
- le moyen de multiplexage optique comprend une pluralité de déflecteurs pilotables, agencés pour pouvoir prendre au moins une première configuration permettant d'orienter une partie des rayons lumineux vers au moins une partie des réseaux de diffraction d'une des cellules lumineuses et une deuxième configuration permettant de ne pas éclairer ladite au moins une partie des réseaux de diffraction de ladite une des cellules lumineuses du dispositif lumineux. À titre d'exemples non limitatifs, le moyen de multiplexage optique peut comprendre au moins un miroir réfléchissant ou semi-réfléchissant et/ou au moins une lentille et/ou une pluralité de miroirs basculant entre deux configurations angulaires différentes. Le moyen de multiplexage optique comprend aussi une pluralité d'actionneurs pilotables et permettant de sélectionner sélectivement ou collectivement le ou les réseaux de diffraction à éclairer afin de générer le lobe de diffraction correspondant et de permette de générer in fine une image stéréoscopique particulière ;
- le dispositif lumineux comprend un obturateur optique situé à l'aplomb d'au moins une partie des cellules lumineuses, ledit obturateur optique étant au moins configurable dans une première configuration dans laquelle au moins un des lobes de diffraction formés par l'un des réseaux de diffraction d'une cellule lumineuse et/ou les pixels lumineux formés par tous les réseaux de diffraction d'une cellule lumineuse sont transmises au travers dudit obturateur optique, et une deuxième configuration dans laquelle au moins un des lobes de diffraction formés par l'un des réseaux de diffraction d'une cellule lumineuse et/ou les pixels lumineux formés par tous les réseaux de diffraction d'une cellule lumineuse sont absorbées par ledit obturateur optique. Ainsi, l'obturateur optique permet de sélectionner les pixels lumineux générés par les cellules lumineuses et qui seront « visibles » par un utilisateur du dispositif lumineux. En d'autres termes, l'obturateur optique joue le rôle d'un filtre spatial permettant de construire des images stéréoscopiques en sélectionnant les pixels lumineux transmis par ledit obturateur optique ;
- l'obturateur optique comprend une pluralité de cellules d'obturation pouvant être configurées sélectivement ou collectivement dans la première et la deuxième configuration ;
- l'obturateur optique est formé d'un écran à cristaux liquides. Alternativement, l'obturateur optique est formé d'un écran de technologie d'électro-mouillage ;
- la surface d'affichage est choisie parmi une lunette arrière du véhicule automobile principal, et/ou une vitre latérale du véhicule automobile principal, et/ou un pare-brise du véhicule automobile principal, et/ou une partie de la carrosserie du véhicule automobile principal. Le système d'avertissement conforme au premier aspect de l'invention permet ainsi de faciliter son intégration sur des parois extérieures d'un véhicule automobile et améliore sa visibilité aux autres véhicules automobiles ;
- le système d'avertissement lumineux comprend une unité de traitement configurée pour calculer au moins une distance d séparant le véhicule automobile principal du véhicule automobile secondaire détecté, le module de commande étant configuré pour piloter le dispositif lumineux afin de générer au moins une image stéréoscopique en fonction de la distance calculée. L'unité de traitement et/ou le module de commande sont, par exemple, composés d'un ou plusieurs microprocesseurs et/ou d'un ensemble de contrôleurs agencés. Éventuellement, le module de commande et l'unité de traitement peuvent être regroupés au sein d'un ou plusieurs des dispositifs précédents cités à titre d'exemples non limitatifs.
- le système de détection et/ou l'unité de traitement et/ou le module de commande sont configurés pour, respectivement et en temps réel, détecter le véhicule automobile secondaire, calculer la distance d et piloter le dispositif lumineux. Selon différentes variantes système d'avertissement conforme au premier aspect de l'invention, le véhicule automobile secondaire détecté et/ou la distance qui sépare le véhicule automobile principal du véhicule automobile secondaire détecté peuvent être respectivement détectés et/ou calculés selon des fréquences d'échantillonnages prédéfinies, ou en fonction de la vitesse du véhicule automobile principal. Une fréquence d'échantillonnage suffisamment élevée permet de détecter plus rapidement les évolutions de l'environnement proximal du véhicule automobile principale, et notamment de détecter plus rapidement les véhicules automobiles secondaires entrant dans le périmètre de détection du système de détection. À titre d'exemple non limitatif, la fréquence d'échantillonnage du système de détection et/ou la fréquence d'échantillonnage du module de commande sont avantageusement supérieures à 100Hz, et préférentiellement de l'ordre de plusieurs kilohertz.

Selon un deuxième aspect de l'invention, il est proposé un procédé d'avertissement lumineux pour véhicule automobile par un système d'avertissement lumineux selon la revendication 12, ledit procédé d'avertissement comprenant les étapes suivantes
- détection de la position relative par rapport au véhicule automobile principal d'un véhicule automobile secondaire au moyen d'un système de détection ;
- émission par le système de détection d'une information, liée à cette position relative, à un module de commande ;
- configuration du dispositif lumineux par le module de commande afin d'afficher au moins une image stéréoscopique sur une surface d'affichage du système d'avertissement lumineux en fonction de l'information liée à la position relative, l'au moins une image stéréoscopique formant un pictogramme lumineux avec une fonction d'avertissement..

De manière avantageuse, le procédé d'avertissement lumineux comprend une étape de détermination de la distance séparant l'autre véhicule automobile détecté du véhicule automobile principal, l'affichage de l'au moins une image stéréoscopique étant réalisée en fonction de la distance déterminée.

Préférentiellement, au moins une dimension de l'image stéréoscopique affichée par le dispositif lumineux est proportionnelle à la distance séparant l'autre véhicule automobile détecté du véhicule automobile principal.

Préférentiellement, les étapes du procédé d'aide à la conduite sont réalisées en temps réel.

Selon un troisième aspect de l'invention, il est proposé un véhicule automobile tel que défini dans la revendication 15. Un tel véhicule est équipé d'un système d'avertissement lumineux conforme au premier aspect de l'invention ou selon l'un quelconque de ses perfectionnements et/ou comprenant des moyens agencés pour mettre en œuvre un procédé d'avertissement conforme au deuxième aspect de l'invention.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue schématique d'un exemple de réalisation de cellule lumineuse agencée pour générer une pluralité d'images stéréoscopiques dans plusieurs directions ;
- la FIGURE 2 illustre une vue schématique en coupe d'un exemple de réalisation de dispositif lumineux permettant de sélectionner une partie des images stéréoscopiques générées par une cellule lumineuse telle qu'illustrée sur la FIGURE 1 ;
- la FIGURE 3 illustre un premier scénario d'usage du dispositif lumineux mis en œuvre dans un système d'avertissement lumineux conforme au premier aspect de l'invention ;
- les FIGURES 4A et 4B illustrent un deuxième scénario d'usage du dispositif lumineux mis en œuvre dans un système d'avertissement lumineux conforme au premier aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

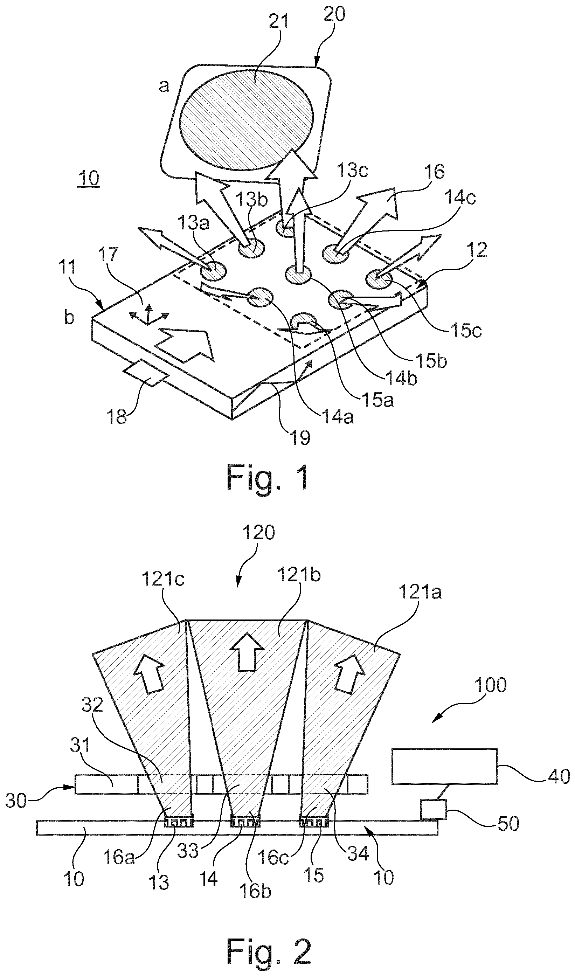

La FIGURE 1 illustre un exemple de réalisation d'une cellule lumineuse 10 d'un dispositif lumineux 100 et formant un système d'avertissement lumineux conforme au premier aspect de l'invention, ledit système lumineux permettant de générer une pluralité d'images en trois dimensions, visibles à l'intérieur d'une zone de vision 120 très large pouvant s'étendre jusqu'à 180°. Le dispositif lumineux 100 est agencé pour générer les images tridimensionnelles de manière simultanée ou séquentielle et selon des directions et des orientations différentes.

Plus particulièrement, le dispositif lumineux 100 comprend une pluralité de cellules lumineuses 10, chaque cellule lumineuse 10 mettant en œuvre une pluralité de réseaux de diffraction orientés dans une direction particulière. À cet effet, le dispositif lumineux 100 comprend :
- au moins une source de lumière, préférentiellement de type électroluminescente, agencée pour générer au moins un rayon lumineux 18 ;
- une pluralité de cellules lumineuses 10 couplées optiquement à la source de lumière par l'intermédiaire d'au moins un collimateur, chaque cellule lumineuse 10 comprenant :
   o un guide d'onde 17 prenant la forme d'un film au moins en partie transparent et de faible épaisseur à l'intérieur duquel l'au moins un rayon lumineux incident 19 est propagé ;
   o un premier groupe de réseaux de diffraction 13a-13c formés sur une surface du guide d'onde 17 et orienté suivant une première direction ;
   o un deuxième groupe de réseaux de diffraction 14a-14c formés sur la surface du guide d'onde 17 et orienté suivant une deuxième direction ;
   o un troisième groupe de réseaux de diffraction 15a-15c formés sur la surface du guide d'onde 17 et orienté suivant une troisième direction ;

Chaque cellule lumineuse 10 et/ou chaque réseau de diffraction 13-15 d'une cellule lumineuse 10 peut être adressé sélectivement ou collectivement à l'aide de moyens de multiplexages non visibles sur la FIGURE 1. Éventuellement, les cellules lumineuses 10 et/ou la pluralité de réseaux de diffraction 13-15 peut aussi être collectivement ou sélectivement modulée grâce à un obturateur 30 externe non décrit sur la FIGURE 1 et qui sera détaillé en référence à la FIGURE 2. La fréquence de modulation est préférentiellement de l'ordre d'une fréquence vidéo, c'est-à-dire de plusieurs dizaines ou centaines de Hertz.

Chaque réseau de diffraction 13-15 est gravé sur une même surface du guide d'onde 17 ou fixé solidairement sur ladite surface dudit guide d'onde 17, préférentiellement par collage. Bien entendu, les caractéristiques morphologiques et/ou dimensionnelles de chaque réseau de diffraction 13-15 dépendent de l'image tridimensionnelle à former. En d'autres termes, chaque réseau de diffraction 13-15 est gravé de manière à générer une image particulière lorsqu'il est éclairé par l'au moins une partie des rayons lumineux 18 générés par l'au moins une source de lumière.

À l'intérieur du guide d'onde 17, les rayons lumineux 18 générés par la source de lumière se propagent et sont appelés rayons lumineux incidents 19 lorsqu'ils illuminent au moins un des réseaux de diffraction.

Le guide d'onde 17 est agencé pour permettre aux rayons lumineux 18 générés par l'au moins une source de lumière de se propager à l'intérieur dudit guide d'onde 17, par réflexion interne totale. Plus particulièrement, chaque source de lumière est couplée optiquement au guide d'onde 17 au niveau d'une zone de collimation 11 par l'intermédiaire d'un collimateur par exemple ou par l'intermédiaire d'un réseau de diffraction, non représenté sur la FIGURE 1, afin qu'au moins une partie des rayons lumineux 18 générés par la source de lumière correspondante soient introduits dans ledit guide d'onde 17. Les rayons lumineux incidents 19 se propagent à l'intérieur de la zone de collimation 11 et en direction de la pluralité des réseaux de diffraction.

Lorsque les rayons lumineux incidents 19 arrivent au niveau d'un réseau de diffraction 13-15, ils interagissent avec le réseau de diffraction 13-15 correspondant et sont diffractés, formant des lobes de diffraction16 dans une direction donnée par l'orientation du réseau de diffraction et le sens d'illumination dudit réseau de diffraction.

Dans le cas où la cellule lumineuse 10 comprend plusieurs réseaux de diffraction 13-15, chaque réseau de diffraction éclairé génère un lobe de diffraction correspondant dans une direction particulière conditionnée par l'orientation du réseau de diffraction correspondant. Ainsi, un observateur peut recevoir dans son œil droit une partie des rayons appartenant à un premier groupe de lobes de diffraction, et dans son œil gauche des rayons appartenant à un deuxième groupe de lobes de diffraction. Le premier groupe de lobes lumineux et le deuxième groupe de lobes lumineux d'une formés par les réseaux de diffraction d'une cellule lumineuse forment collectivement un pixel lumineux visible par l'observateur. Les intensités des lobes de diffraction n'étant pas les mêmes, il est possible de générer un effet stéréoscopique volumétrique, faisant apparaître à l'observateur le pixel lumineux de la cellule lumineuse 10 dans une position proximale ou distale par rapport au guide d'onde 11.

Pour une orientation donnée du réseau de diffraction 13-15, un éclairage par un premier côté du réseau de diffraction 13-15 produit un premier lobe de diffraction ; et un éclairage par un deuxième côté du même réseau de diffraction 13-15 produit un second lobe de diffraction. Le pixel lumineux correspondant aux lobes de diffraction produits par les réseaux de diffraction 13-15 de la cellule lumineuse 10 apparait ainsi comme étant situé soit devant, soit derrière le plan du guide d'onde 11. Il est ainsi possible de produire un effet de battement du point lumineux par la simple alternance de la direction depuis laquelle les réseaux de diffraction 13-15 sont éclairés.

La génération sur le même guide d'onde 11 de plusieurs cellules lumineuses 10 (non représentées sur la FIGURE 1) permet de créer plusieurs pixels lumineux, qui forment collectivement une image stéréoscopique pour l'observateur.

Par ailleurs, les réseaux de diffraction 13-15 sont conçus pour une longueur d'onde (source 18) donnée, de manière à pouvoir interagir avec des rayons lumineux produits par une source de lumière correspondante à la même longueur d'onde. Il est possible de générer sur le même guide d'onde 17 plusieurs réseaux de diffraction correspondant à plusieurs longueurs d'onde différentes, et en particuliers trois réseaux de diffraction correspondant à trois longueurs d'ondes différentes, ou trois groupes de réseaux de diffraction, chaque groupe de réseaux de diffraction étant conçu pour l'une des trois longueurs d'ondes données. En variant la direction d'incidence des différentes sources lumineuses, il est ainsi possible de générer trois images de couleur différente, simultanément ou alternativement.

Il est ainsi possible de générer des images tridimensionnelles en couleur sans utiliser des filtres de couleurs et de manière plus simple à l'aide d'un dispositif lumineux 100 complètement transparent. Consécutivement, il est aussi possible de réaliser des séquences animées de plusieurs images tridimensionnelles d'une manière très simple.

À titre d'exemple non limitatif, la cellule lumineuse 10 illustrée sur la FIGURE 1 comprend un substrat en verre jouant le rôle de guide d'onde 17, à la surface duquel une couche de nitrure de silicium est déposée, préférentiellement par dépôt en phase vapeur électrochimique, et préférentiellement encore suivant une épaisseur de 100 nm. Les réseaux de diffraction 13-15 sont gravés à la surface de la couche de nitrure de silicium par des méthodes connues de lithographie.

La FIGURE 1 illustre une vue par microscopie électronique à balayage d'un réseau de diffraction 20 d'une telle cellule lumineuse 10 d'un dispositif lumineux. Le réseau de diffraction 20 est fabriqué par des techniques classiques de photolithographie et comprend une pluralité de créneaux 21 tous parallèles et orientés suivant une direction principale, chaque créneau 21 étant rectiligne.

Par ailleurs, la FIGURE 1 illustre de manière schématique les différents lobes de diffraction16 projetés par chaque réseau de diffraction d'une cellule lumineuse 10 du dispositif lumineux 100. La cellule lumineuse 10 est éclairée par une lumière collimatée 18 formée des rayons lumineux qui sont générés par une source de lumière non représentée. Chaque réseau de diffraction 13-15 ainsi éclairé disperse les rayons lumineux correspondants 18 par diffraction au premier ordre : chaque réseau de diffraction 13-15 forme un lobe de diffraction résultant de l'interaction des rayons lumineux incidents 19 avec la forme des créneaux dudit réseau de diffraction 13-15. Chaque réseau de diffraction 13-15 forme un lobe de diffraction 16 dans une direction particulière, les directions particulières de tous les réseaux de diffraction 13-15 de la cellule lumineuse 10 formant la zone de vision 120. Tous les lobes de diffraction 16 d'une cellule lumineuse forment un pixel lumineux.

Ainsi, un dispositif lumineux comprenant une pluralité de cellules lumineuses 10 telles qu'illustrée sur la FIGURE 1 permet de générer une pluralité d'images statiques tridimensionnelles, sous l'effet de l'éclairage des réseaux de diffraction 13-15 correspondants par une lumière collimatée.

La FIGURE 2 illustre un exemple de réalisation d'un dispositif lumineux 100 comprenant une pluralité de cellules lumineuses 10 telles que décrites précédemment. La pluralité de cellules lumineuses 10 est éclairée par une source de lumière 40. La source de lumière 40 est couplée optiquement aux cellules lumineuses 10 par l'intermédiaire d'un collimateur 50. Le dispositif lumineux 100 comprend aussi un obturateur 30 situé à l'aplomb des cellules lumineuses 10. L'obturateur 30 est agencé pour permettre d'occulter tout ou partie d'un plan transverse à la propagation des lobes de diffraction 16 et/ou des pixels lumineux générés par les cellules lumineuses 10. Plus particulièrement, l'obturateur 30 comprend une pluralité de cellules d'obturation 31-34, chaque cellule d'obturation 31-34 pouvant être pilotée sélectivement ou collectivement par rapport aux autres cellules d'obturation 31-34. L'obturateur 30 est piloté par un module de commande non représenté afin de configurer chaque cellule d'obturation 31-34 dans une configuration passante ou dans une configuration bloquante, chaque cellule d'obturation 31-34 comprenant des électrodes reliées électriquement audit module de commande afin de pouvoir les polariser électriquement.

Dans la configuration passante, la cellule d'obturation 31-34 correspondante a un coefficient de transmission maximal, et préférentiellement sensiblement égal à 1, afin d'être transparente ou quasi transparente et de laisser passer le(s) lobe(s) de diffraction formé(s) par une partie des réseaux de diffraction 13-15 situé en dessous. Dans la configuration bloquante, la cellule d'obturation 31-34 correspondante a un coefficient de transmission minimal, et préférentiellement sensiblement égal à zéro, afin d'être opaque ou quasi opaque et d'absorber les rayons lumineux diffractés par une partie des réseaux de diffraction 13-15 situé en dessous.

La configuration passante d'une cellule d'obturation 31-34 est obtenue pour une première valeur du champ électrique appliqué entre ses bornes, par exemple pour un potentiel électrique haut, correspondant à une tension de polarisation non nulle. A contrario, la configuration bloquante d'une cellule d'obturation 31-34 est obtenue pour une deuxième valeur du champ électrique appliqué entre ses bornes, par exemple pour un potentiel électrique minimal, correspondant à une tension de polarisation nulle ou minimale.

Les cellules d'obturation 31-34 sont pilotées par le module de commande de manière à être configurées dans l'une ou l'autre des configurations précédentes pour sélectionner un ou plusieurs lobes de diffraction et/ou pixels lumineux formés par les réseaux de diffraction 13-15 situés en dessous. Ainsi, une modulation des cellules d'obturation 31-34 permet de sélectionner séquentiellement une pluralité de lobes de diffraction 16a-16c et/ou une pluralité de pixels lumineux formés par les réseaux de diffraction 13-5 situés en dessous, permettant ainsi de produire un effet visuel dynamique d'images tridimensionnelles 121a-121c.

À titre d'exemple non limitatif, l'obturateur 30 peut avantageusement prendre la forme d'un écran à cristaux liquides, chaque cellule d'obturation 31-34 étant formée par une cellule à cristaux liquide pouvant être configurée dans une configuration passante ou une configuration bloquante en fonction du champ électrique appliqué entre ses bornes. En particulier l'obturateur 30 peut préférentiellement être du type d'un écran à électromouillage.

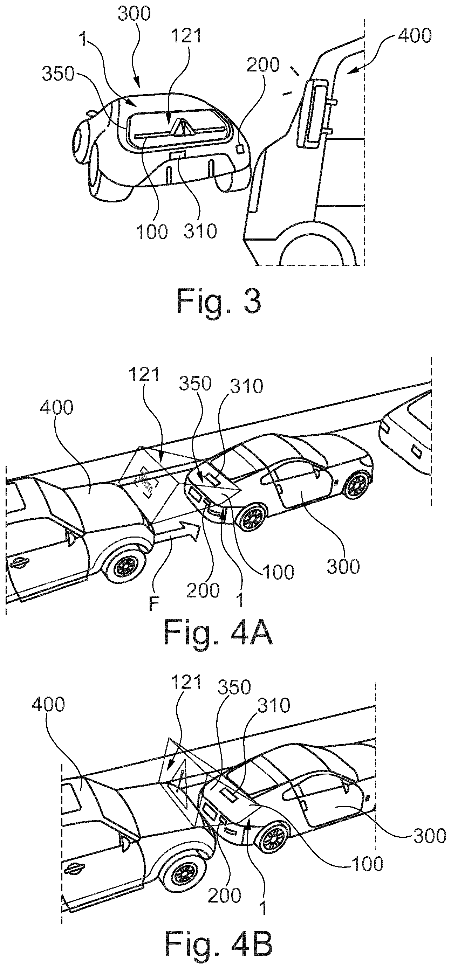

Les FIGURES 3 et 4 illustrent des exemples d'application d'un système d'avertissement lumineux 1 conforme au premier aspect de l'invention, et mettant en œuvre un dispositif lumineux 100 permettant de générer au moins une image stéréoscopique 121. Le système d'avertissement lumineux 1 équipe un véhicule automobile dit principal 300. Dans chacun des cas d'application, un module de commande 310 est prévu pour configurer le dispositif lumineux 100 afin de permettre l'affichage d'au moins une image stéréoscopique 121 en fonction d'une détection d'un véhicule automobile secondaire 400 situé à proximité du véhicule automobile principal 300. Pour faciliter la compréhension de l'invention, le système de détection 200 et le module de commande 310 associés au système d'avertissement lumineux 1 conforme au premier aspect de l'invention ont été représentés de façon schématique.

Tel que décrit précédemment, chacun des usages d'application suivants est mis en œuvre par une première étape de détection d'un véhicule automobile secondaire 400 situé à proximité du véhicule automobile principal 300 afin de générer une information de proximité dudit véhicule automobile secondaire 400, et par une deuxième étape d'affichage d'au moins une image stéréoscopique 121 sur une surface d'affichage 350 du véhicule automobile principal 300, en fonction de l'information de proximité.

Le dispositif lumineux 100 appliqué dans chacun de ces cas est agencé pour afficher une pluralité d'images stéréoscopiques dans au moins deux directions différentes sur la surface d'affichage 350.

Tel que décrit précédemment, et afin de générer la pluralité d'images stéréoscopiques 121, le dispositif lumineux 100 comprend avantageusement (i) au moins une source de lumière configurée pour pouvoir émettre au moins un rayon lumineux et au moins une cellule lumineuse, chaque cellule lumineuse comprenant (i) un guide d'onde agencé pour transporter au moins une partie de l'au moins un rayon lumineux émis par la source de lumière correspondante entre une première extrémité située du côté de la source de lumière et une deuxième extrémité, et (ii) une pluralité de groupes de réseaux de diffraction situés au niveau de la deuxième extrémité du guide d'onde, au moins une partie des réseaux de diffraction étant éclairée par l'au moins une partie des rayons lumineux transportés par le guide d'onde afin de générer au moins un lobe de diffraction, l'ensemble des lobes de diffraction générés par les réseaux de diffraction éclairés formant l'au moins une image stéréoscopique.

Selon un mode de réalisation de l'invention, le système de détection de proximité 200 du véhicule automobile secondaire 400 comprend des capteurs de proximité, par exemple du type à ultrasons, ou un système LIDAR (acronyme anglais pour « light detection and ranging », télédétection par laser). Le système de détection est agencé pour détecter au moins un véhicule automobile secondaire 400 dans une zone de détection qui s'étend avantageusement sur plusieurs mètres dans au moins une direction perpendiculaire à la face du véhicule automobile principal 300 sur laquelle il est embarqué. Dans l'exemple illustré sur la FIGURE 3, le système de détection 200 est avantageusement intégré sur une face arrière du véhicule automobile principal 300, et plus particulièrement sur le pare-chocs arrière dudit véhicule automobile principal 300, afin de pouvoir détecter les véhicules automobiles secondaires 400 se trouvant à proximité de la face arrière du véhicule automobile principal 300. Bien entendu, le système de détection 200 pourrait être intégré alternativement ou complémentairement sur une face latérale et/ou sur une face avant du véhicule automobile principal 300 afin de détecter des véhicules automobiles secondaires 400 arrivant à proximité dudit véhicule automobile principal 300 respectivement par l'un de ses côtés et/ou par l'avant.

Dès qu'un véhicule automobile secondaire 400 pénètre à l'intérieur de la zone de détection du système de détection 200, ou lorsqu'il franchit une distance seuil située à l'intérieur de la zone de détection, alors le module de commande 310 configure le dispositif lumineux 100 afin qu'il génère au moins une image stéréoscopique 121 pour avertir le véhicule automobile secondaire 400 de sa proximité avec le véhicule automobile principal 300.

La FIGURE 3 illustre un premier scénario d'usage du dispositif lumineux 100 décrit précédemment dans un système d'avertissement lumineux conforme au premier aspect de l'invention et équipant un véhicule automobile 300.

Dans l'exemple illustré, le dispositif lumineux 100 est monté sur une face arrière du véhicule automobile 300, et plus particulièrement sur la lunette arrière 350, au moins une partie de ladite lunette arrière 350 formant la surface d'affichage du dispositif lumineux 100. En particulier, le guide d'onde et la pluralité de groupes de réseaux de diffraction sont situés au niveau de la lunette arrière 350 afin de générer les images stéréoscopiques 121 correspondantes au niveau de ladite lunette arrière 350. Bien entendu, le dispositif lumineux 100 permet de générer au moins une image stéréoscopique 121 tel que décrit précédemment.

Le dispositif lumineux 100 est piloté par un module de commande 310 pour générer au moins une image stéréoscopique lorsque le véhicule automobile secondaire 400 est détecté à proximité du véhicule automobile principal 300, par l'intermédiaire du système de détection 200. La surface d'affichage est ainsi automatiquement éclairée quel que soit l'endroit où se situe le véhicule automobile secondaire 400, dès lors qu'il se trouve dans la zone de détection.

En fonction des images stéréoscopiques 121 à générer, le module de commande 310 configure la ou les sources de lumières du dispositif lumineux 100 et adresse le ou les réseaux de diffraction correspondants afin de générer lesdites images stéréoscopiques 121 correspondantes. Les sources de lumière sont du type sources laser, émettant préférentiellement une lumière cohérente, éventuellement de couleurs différentes. Les sources lasers peuvent être situées à proximité de la surface d'affichage ou déportées et reliées optiquement aux réseaux de diffractions par des guides de lumières à l'intérieur du véhicule automobile principal 300.

Le dispositif lumineux 100 est alors configuré pour émettre une première série d'images stéréoscopiques indiquant au véhicule automobile secondaire 400 qu'il se situe à proximité du véhicule automobile principal 300, par exemple à l'aide d'un pictogramme représentant un point d'exclamation à l'intérieur d'un triangle. À cet effet, la première série d'images stéréoscopiques 121 est par exemple affichée dans une première direction donnant la perception au véhicule automobile secondaire 400 que lesdites images stéréoscopiques 121 sont situées dans un plan situé en avant de la lunette arrière 350, renforçant la perception du message lumineux par le conducteur du véhicule automobile secondaire 400.

Un tel effet est obtenu grâce à au moins une cellule lumineuse dont au moins une partie des réseaux de diffraction sont éclairés par des rayons lumineux émis par les sources de lumière correspondantes et polarisées électriquement à cet effet. Les rayons lumineux émis par les sources de lumière se propagent à l'intérieur du guide d'onde pour parvenir au niveau d'un ou plusieurs groupes de réseaux de diffraction et selon un premier angle d'incidence. L'interaction entre les rayons lumineux et le ou les groupes de réseaux de diffraction produit plusieurs lobes de diffraction. Bien entendu, chaque réseau de diffraction comprend des structures dimensionnelles particulières formant un et un seul lobe de diffraction lorsqu'il est éclairé par des rayons lumineux des sources de lumière. L'ensemble des lobes de diffraction générés par les réseaux de diffraction éclairés forment collectivement l'au moins une image stéréoscopique

On comprend que la mise en œuvre du dispositif lumineux 100 au voisinage d'une surface d'affichage appropriée, notamment en mettant le guide d'onde et la face sur laquelle sont formées les réseaux de diffraction en regard de ladite surface d'affichage, permet l'affiche d'image(s) stéréoscopique(s) particulièrement efficace en terme d'information à communiquer à un véhicule automobile secondaire 400, ces images stéréoscopiques pouvant prendre la forme de pictogramme(s) et/ou de message(s) écrits avec une fonction d'avertissement au contenu sans équivoque pour l'utilisateur.

À intervalle de temps régulier, le dispositif lumineux 100 peut être piloté par le module de commande pour qu'il émette une deuxième série d'images stéréoscopiques, rendant dynamique le message transmis sur la surface d'affichage. À titre d'exemple, la deuxième série d'images stéréoscopiques peut être identique à la première série d'images stéréoscopiques, mais la deuxième série d'images stéréoscopiques est affichée dans une deuxième direction, différente de la première direction, et donnant la perception à l'utilisateur que la deuxième série d'images stéréoscopiques est située plus à droite que la première série d'images.

Un tel effet est obtenu grâce à au moins une cellule lumineuse dont au moins une partie des réseaux de diffraction sont éclairés par des rayons lumineux émis par les sources de lumière correspondantes et polarisées électriquement à cet effet. Les rayons lumineux émis par les sources de lumière se propagent à l'intérieur du guide d'onde pour parvenir au niveau d'un ou plusieurs groupes de réseaux de diffraction et selon un deuxième angle d'incidence. Les réseaux de diffraction sont éclairés depuis une deuxième direction différente de la première direction d'éclairage afin de produire des deuxièmes lobes de diffraction, mais dans une direction sensiblement différente, afin de donner l'impression que l'image stéréoscopique s'est déplacée.

Bien entendu, d'autre effets peuvent être réalisés sur les images stéréoscopiques générées à l'aide d'un tel système d'avertissement lumineux, tels que par exemple des effets de défilement, de gonflement, de contraction, de pivotement, des variations de couleurs... Comme décrit précédemment, une image stéréoscopique 121 générée par un réseau de diffraction du dispositif lumineux 100 est statique lorsque le dispositif lumineux 100 est configuré par le module de commande 310 pour éclairer de manière invariante le réseau de diffraction correspondant sous un angle d'incidence donné. A contrario, une image stéréoscopique 121 générée par un réseau de diffraction du dispositif lumineux 100 est dynamique lorsque le dispositif lumineux 100 est configuré par le module de commande 310 pour éclairer successivement une pluralité de réseaux de diffraction afin de générer une successivement plusieurs images stéréoscopiques 121 statiques, ou lorsque le dispositif lumineux 100 est configuré par le module de commande 310 pour éclairer simultanément plusieurs réseaux de diffraction dans une pluralité de directions et pour filtrer spatialement certaines des images stéréoscopiques 121 statiques ainsi générées. Ainsi, dans cette deuxième variante de réalisation d'images stéréoscopiques dynamiques, l'évolution dynamique d'un obturateur multizones situé au-dessus de la surface d'affichage permet de configurer un coefficient de transmission pour chaque zone dudit obturateur et de transmettre ou de bloquer au moins une image stéréoscopique générée par le réseau de diffraction correspondant situé en dessous. Le pilotage dynamique de l'obturateur multizones, par l'intermédiaire d'instructions générées par le module de commande 310, permet de sélectionner une ou plusieurs zones dans lesquelles l'image stéréoscopique statique correspondante générée par le réseau de diffraction situé directement en dessous est transmise, et donc visible. De manière analogue, le pilotage dynamique de l'obturateur multizones permet de sélectionner une ou plusieurs zones dans lesquelles l'image stéréoscopique statique correspondante générée par le réseau de diffraction situé directement en dessous est bloquée, et donc non visible.

Selon une variante de réalisation, le système d'avertissement lumineux comprend une unité de traitement configurée pour calculer une distance séparant l'autre véhicule automobile 400 du véhicule automobile principal 300, et éventuellement pour calculer une trajectoire de déplacement dudit véhicule automobile secondaire 400. Le module de commande 310 configurant le dispositif lumineux 100 est alors apte à recevoir une information de distance et/ou de position, et le cas échéant une information de trajectoire du véhicule automobile secondaire 400, afin de pouvoir générer des images stéréoscopiques dynamiques dont le contenu et/ou l'apparence est évolutive et dépend de la position et/ou de la distance du véhicule automobile secondaire 400 par rapport au véhicule automobile principal 300.

Avantageusement, le système de détection et/ou le module de commande 310 et/ou l'unité de traitement et/ou le dispositif lumineux 100 sont configurés pour fonctionner en temps réel.

Les FIGURES 4A et 4B illustrent un deuxième scénario d'usage du dispositif lumineux 100 mis en œuvre dans un système d'avertissement lumineux 1 conforme au premier aspect de l'invention. Plus particulièrement, les FIGURES 4A et 4B illustrent une situation dans laquelle un véhicule secondaire 400 s'approche du véhicule principal 300 suivant une direction F, afin par exemple de réaliser une manœuvre de stationnement.

En deçà d'une distance seuil correspondant à une limite de détection du système de détection 200 ou à une valeur prédéterminée comprise dans la zone de détection dudit système de détection 200, le système de détection 200 détecte le véhicule automobile secondaire 400 et transmet au module de commande 310 une information de détection de la position relative par rapport au véhicule automobile principal du véhicule automobile secondaire détecté qui permet audit module de commande 310 de configurer le dispositif lumineux 100 afin qu'il génère au moins une image stéréoscopique 121.

Dans l'exemple illustré sur les FIGURES 4A et 4B, le dispositif lumineux 100 est formé par, ou est compris dans, les feux arrières et/ou les feux stops du véhicule automobile principal 300. La surface d'affichage 350 est ainsi formée par une partie de la face arrière du véhicule automobile principal 300, par exemple une partie de sa carrosserie.

Afin que le système d'avertissement lumineux 1 fonctionne lorsque le véhicule automobile principal 300 n'est pas en marche, une batterie électrique peut être prévue pour alimenter le système de détection 200 et, le cas échéant, alimenter notamment le module de commande 310 et/ou le dispositif lumineux 100 afin de pouvoir émettre les images stéréoscopiques 100.

De manière avantageuse, le système d'avertissement lumineux 1 illustré sur les FIGURES 4A et 4B permet ainsi de générer des images stéréoscopiques 121 qui dépendent de la position relative du véhicule automobile secondaire 400 par rapport au véhicule automobile principal 300, et permettent à la fois de faciliter les manœuvres de stationnement du véhicule automobile secondaire 400 et d'éviter les impacts et/ou accidents. Ainsi, le dispositif lumineux 100 peut être configuré pour afficher, éventuellement en temps réel, l'évolution de la distance séparant le véhicule automobile secondaire 400 du véhicule automobile principal 300, grâce à la collaboration entre le système de détection 200, l'unité de traitement et le module de commande 310.

Bien sûr, l'invention n'est pas limitée aux exemples qui viennent d'être décrits et de nombreux aménagements peuvent être apportés à ces exemples sans sortir du cadre de l'invention tel que défini par les revendications. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Système d'avertissement lumineux (1) pour un véhicule automobile principal, ledit système d'avertissement lumineux (1) comprenant :
- un système de détection (200) pour calculer la position relative par rapport au véhicule automobile principal d'au moins un véhicule automobile secondaire (400) et émettre une information liée à la position relative ;
- une surface d'affichage (350) située sur une surface destinée à former une surface extérieure du véhicule automobile principal (300) ;
- un dispositif lumineux (100) pour afficher au moins une image stéréoscopique sur la surface d'affichage (350) correspondante, l'image stéréoscopique formant au moins un pictogramme lumineux avec une fonction d'avertissement; et
- un module de commande (310) pour recevoir l'information liée à la position relative émise par le système de détection (200) et pour configurer le dispositif lumineux (100), et l'image stéréoscopique qu'il affiche, en fonction de cette information liée à la position relative,
- une unité de traitement configurée pour calculer la distance séparant le véhicule automobile principal (300) du véhicule automobile secondaire (400), dans le quel ledit dispositif lumineux (100) comprend :
- au moins une source de lumière (40) configurée pour pouvoir émettre au moins un rayon lumineux ;
- au moins une cellule lumineuse (10), chaque cellule lumineuse (10) comprenant :
∘ un guide d'onde (17) agencé pour transporter au moins une partie de l'au moins un rayon lumineux émis par la source de lumière (40) correspondante entre une première extrémité située du côté de la source de lumière (40) et une deuxième extrémité ;
∘ au moins un réseau de diffraction (13-15) situé au niveau de la deuxième extrémité du guide d'onde (17), au moins une partie des réseaux de diffraction (13-15) étant éclairée par l'au moins une partie des rayons lumineux transportés par le guide d'onde (17) afin de générer au moins un lobe de diffraction **caractérisé en ce que** le module de commande (310) configurant le dispositif lumineux (100) est alors apte à recevoir une information de distance et/ou de position, afin de pouvoir générer des images stéréoscopiques dynamiques dont le contenu et/ou l'apparence est évolutive et dépend de la position et/ou de la distance du véhicule automobile secondaire (400) par rapport au véhicule automobile principal (300).

2. Système d'avertissement lumineux (1) selon la revendication 1, **caractérisé en ce que** le dispositif lumineux (100) comprend un collimateur (50) agencé pour coupler optiquement l'au moins une source de lumière (40) avec le guide d'onde (17).

3. Système d'avertissement lumineux (1) selon l'une quelconque des revendications 1 à 2, **caractérisé en ce qu'**un premier réseau de diffraction (13-15) a des premières caractéristiques dimensionnelles et un deuxième réseau de diffraction (13-15) a des deuxièmes caractéristiques dimensionnelles différentes des premières caractéristiques dimensionnelles afin de générer des lobes de diffraction différents lorsqu'ils sont éclairés par l'au moins un rayon lumineux.

4. Système d'avertissement lumineux (1) selon la revendication précédente, **caractérisé en ce que** le premier réseau de diffraction (13-15) et le deuxième réseau de diffraction (13-15) sont orientés suivant des directions différentes.

5. Système d'avertissement lumineux (1) selon l'une quelconque des revendications 1 à 4, **caractérisé en ce que** l'au moins une source de lumière (40) est du type d'une source laser ou d'une diode électroluminescente.

6. Système d'avertissement lumineux (1) selon la revendication précédente, **caractérisé en ce que** l'au moins une source de lumière (40) comprend :
- une première source de lumière (40) émettant au moins un rayon lumineux d'une première couleur ;
- une deuxième source de lumière (40) émettant au moins un rayon lumineux d'une deuxième couleur ;
- une troisième source de lumière (40) émettant au moins un rayon lumineux d'une troisième couleur.

7. Système d'avertissement lumineux (1) selon l'une quelconque des revendications précédentes, **caractérisé en ce que** le dispositif lumineux (100) comprend un moyen de multiplexage optique agencé pour éclairer sélectivement chaque cellule lumineuse (10).

8. Système d'avertissement lumineux (1) selon l'une quelconque des revendications précédentes, **caractérisé en ce que** le dispositif lumineux (100) comprend un obturateur optique (30) situé à l'aplomb d'au moins une partie des cellules lumineuses, ledit obturateur optique (30) étant configurable dans une première configuration dans laquelle les images stéréoscopiques formées par la ou les cellules lumineuses correspondantes sont transmises au travers dudit obturateur optique (30), et une deuxième configuration dans laquelle les images stéréoscopiques formées par la ou les cellules lumineuses correspondantes sont absorbées par ledit obturateur optique (30).

9. Système d'avertissement lumineux (1) selon l'une quelconque des revendications précédentes, **caractérisé en ce que** la surface d'affichage (350) est choisie parmi :
- une lunette arrière du véhicule automobile principal (300) ; et/ou
- une vitre latérale du véhicule automobile principal (300) ; et/ou
- un pare-brise du véhicule automobile principal (300) ; et/ou
- une partie de la carrosserie du véhicule automobile principal (300).

10. Système d'avertissement lumineux (1) selon l'une quelconque des revendications précédentes, **caractérisé en ce qu'**il comprend une unité de traitement configurée pour calculer au moins une distance séparant le véhicule automobile principal (300) du véhicule automobile secondaire (400) détecté, le module de commande (310) étant configuré pour piloter le dispositif lumineux (100) afin de générer au moins une image stéréoscopique en fonction de la distance calculée.

11. Système d'avertissement lumineux (1) selon la revendication précédente, **caractérisé en ce que** le système de détection (200) et/ou l'unité de traitement et/ou le module de commande (310) sont configurés pour, respectivement et en temps réel, détecter le véhicule automobile secondaire (400), calculer la distance (d) et piloter le dispositif lumineux (100).

12. Procédé d'avertissement lumineux pour véhicule automobile par un système d'avertissement lumineux (1) selon l'une quelconque des revendications précédentes, ledit procédé d'avertissement comprenant les étapes suivantes :
- détection de la position relative par rapport au véhicule automobile principal d'un véhicule automobile secondaire (400) au moyen d'un système de détection (200) ;
- émission par le système de détection d'une information, liée à cette position relative, à un module de commande ;
- configuration du dispositif lumineux (100) par le module de commande (310) afin d'afficher au moins une image stéréoscopique sur une surface d'affichage (350) du système d'avertissement lumineux (1) en fonction de l'information liée à la position relative, l'au moins une image stéréoscopique formant un pictogramme lumineux avec une fonction d'avertissement.

13. Procédé d'avertissement selon la revendication précédente, **caractérisé en ce qu'**il comprend une étape de détermination de la distance séparant le véhicule automobile secondaire (400) détecté du véhicule automobile principal (300), l'affichage de l'au moins une image stéréoscopique étant réalisée en fonction de la distance déterminée.

14. Procédé d'avertissement selon la revendication précédente, **caractérisé en ce qu'**au moins une dimension de l'image stéréoscopique affichée par le dispositif lumineux (100) est proportionnelle à la distance séparant le véhicule automobile secondaire (400) détecté du véhicule automobile principal (300).

15. Véhicule automobile équipé d'un système d'avertissement lumineux (1) selon l'une quelconque des revendications 1 à 11 et/ou comprenant des moyens agencés pour mettre en œuvre un procédé d'avertissement selon l'une quelconque des revendications 12 à 14.

## Patentansprüche

1. Warnleuchtsystem (1) für ein Hauptkraftfahrzeug, das Warnleuchtsystem (1) umfassend:
- ein Detektionssystem (200), um die relative Position in Bezug auf das Hauptkraftfahrzeug mindestens eines sekundären Kraftfahrzeugs (400) zu berechnen und eine mit der relativen Position verknüpfte Information auszusenden;
- eine Anzeigefläche (350), die auf einer Fläche gelegen ist, die dazu bestimmt ist, eine Außenfläche des Hauptkraftfahrzeugs (300) zu bilden;
- eine Leuchtvorrichtung (100), um mindestens ein stereoskopisches Bild auf der entsprechenden Anzeigefläche (350) anzuzeigen, wobei das stereoskopische Bild mindestens ein Leuchtpiktogramm mit einer Warnfunktion bildet; und
- ein Steuerungsmodul (310), um die mit der relativen Position verknüpfte Information, die von dem Detektionssystem (200) ausgesendet wird, zu empfangen und um die Leuchtvorrichtung (100) und das stereoskopische Bild, das sie anzeigt, in Abhängigkeit von dieser mit der relativen Position verknüpften Information zu konfigurieren,
- eine Verarbeitungseinheit, die dazu ausgestaltet ist, die Entfernung zu berechnen, die das Hauptkraftfahrzeug (300) von dem sekundären Kraftfahrzeug (400) trennt,
wobei die Leuchtvorrichtung (100) umfasst:
- mindestens eine Lichtquelle (40), die dazu ausgestaltet ist, mindestens einen Lichtstrahl aussenden zu können;
- mindestens eine Leuchtzelle (10), wobei jede Leuchtzelle (10) umfasst:
∘ einen Wellenleiter (17), der dazu eingerichtet ist, einen Teil des mindestens einen von der entsprechenden Lichtquelle (40) ausgesendeten Lichtstrahls zwischen einem ersten Ende, das auf der Seite der Lichtquelle (40) gelegen ist, und einem zweiten Ende zu transportieren;
∘ mindestens ein Beugungsgitter (13-15), das an dem zweiten Ende des Wellenleiters (17) gelegen ist, wobei mindestens ein Teil der Beugungsgitter (13-15) von dem mindestens einen Teil der von dem Wellenleiter (17) transportierten Lichtstrahlen beleuchtet wird, um mindestens eine Beugungskeule zu erzeugen
**dadurch gekennzeichnet, dass** das die Leuchtvorrichtung (100) konfigurierende Steuerungsmodul (310) dann geeignet ist, eine Entfernungs- und/oder Positionsinformation zu empfangen, um dynamische stereoskopische Bilder erzeugen zu können, deren Inhalt und/oder Erscheinungsbild evolutiv ist und von der Position und/oder von der Entfernung des sekundären Kraftfahrzeugs (400) in Bezug auf das Hauptkraftfahrzeug (300) abhängt.

2. Warnleuchtsystem (1) nach Anspruch 1, **dadurch gekennzeichnet, dass** die Leuchtvorrichtung (100) einen Kollimator (50) umfasst, der dazu eingerichtet ist, die mindestens eine Lichtquelle (40) optisch mit dem Wellenleiter (17) zu koppeln.

3. Warnleuchtsystem (1) nach einem der Ansprüche 1 bis 2, **dadurch gekennzeichnet, dass** ein erstes Beugungsgitter (13-15) erste maßliche Merkmale hat und ein zweites Beugungsgitter (13-15) zweite maßliche Merkmale hat, die von den ersten maßlichen Merkmalen verschieden sind, um verschiedene Beugungskeulen zu erzeugen, wenn sie von dem mindestens einen Lichtstrahl beleuchtet werden.

4. Warnleuchtsystem (1) nach dem vorhergehenden Anspruch, **dadurch gekennzeichnet, dass** das erste Beugungsgitter (13-15) und das zweite Beugungsgitter (13-15) entlang verschiedener Richtungen ausgerichtet sind.

5. Warnleuchtsystem (1) nach einem der Ansprüche 1 bis 4, **dadurch gekennzeichnet, dass** die mindestens eine Lichtquelle (40) vom Typ einer Laserquelle oder einer Leuchtdiode ist.

6. Warnleuchtsystem (1) nach dem vorhergehenden Anspruch, **dadurch gekennzeichnet, dass** die mindestens eine Lichtquelle (40) umfasst:
- eine erste Lichtquelle (40), die mindestens einen Lichtstrahl einer ersten Farbe aussendet;
- eine zweite Lichtquelle (40), die mindestens einen Lichtstrahl einer zweiten Farbe aussendet;
- eine dritte Lichtquelle (40), die mindestens einen Lichtstrahl einer dritten Farbe aussendet.

7. Warnleuchtsystem (1) nach einem der vorhergehenden Ansprüche, **dadurch gekennzeichnet, dass** die Leuchtvorrichtung (100) ein Mittel zum optischen Multiplexen umfasst, das dazu eingerichtet ist, jede Leuchtzelle (10) selektiv zu beleuchten.

8. Warnleuchtsystem (1) nach einem der vorhergehenden Ansprüche, **dadurch gekennzeichnet, dass** die Leuchtvorrichtung (100) eine optische Blende (30) umfasst, die lotrecht zu mindestens einem Teil der Leuchtzellen gelegen ist, wobei die optische Blende (30) in eine erste Konfiguration konfigurierbar ist, in der die von der oder den entsprechenden Leuchtzellen gebildeten stereoskopischen Bilder durch die optische Blende (30) transmittiert werden, und eine zweite Konfiguration, in der die von der oder den entsprechenden Leuchtzellen gebildeten stereoskopischen Bilder von der optischen Blende (30) absorbiert werden.

9. Warnleuchtsystem (1) nach einem der vorhergehenden Ansprüche, **dadurch gekennzeichnet, dass** die Anzeigefläche (350) ausgewählt ist aus:
- einer Heckscheibe des Hauptkraftfahrzeugs (300); und/oder
- einer Seitenscheibe des Hauptkraftfahrzeugs (300); und/oder
- einer Windschutzscheibe des Hauptkraftfahrzeugs (300); und/oder
- einem Teil der Karosserie des Hauptkraftfahrzeugs (300).

10. Warnleuchtsystem (1) nach einem der vorhergehenden Ansprüche, **dadurch gekennzeichnet, dass** es eine Verarbeitungseinheit umfasst, die dazu ausgestaltet ist, mindestens eine Entfernung zu berechnen, die das Hauptkraftfahrzeug (300) von dem detektierten sekundären Kraftfahrzeug (400) trennt, wobei das Steuerungsmodul (310) dazu ausgestaltet ist, die Leuchtvorrichtung (100) anzusteuern, um mindestens ein stereoskopisches Bild in Abhängigkeit von der berechneten Entfernung zu erzeugen.

11. Warnleuchtsystem (1) nach dem vorhergehenden Anspruch, **dadurch gekennzeichnet, dass** das Detektionssystem (200) und/oder die Verarbeitungseinheit und/oder das Steuerungsmodul (310) dazu ausgestaltet sind, in Echtzeit das sekundäre Kraftfahrzeug (400) zu detektieren, die Entfernung (d) zu berechnen beziehungsweise die Leuchtvorrichtung (100) anzusteuern.

12. Warnleuchtverfahren für ein Kraftfahrzeug durch ein Warnleuchtsystem (1) nach einem der vorhergehenden Ansprüche, wobei das Warnverfahren die folgenden Schritte umfasst:
- Detektieren der relativen Position in Bezug auf das Hauptkraftfahrzeug eines sekundären Kraftfahrzeugs (400) mittels eines Detektionssystems (200);
- Aussenden durch das Detektionssystem einer Information, die mit dieser relativen Position verknüpft ist, an ein Steuerungsmodul;
- Konfiguration der Leuchtvorrichtung (100) durch das Steuerungsmodul (310), um mindestens ein stereoskopisches Bild auf einer Anzeigefläche (350) des Warnleuchtsystems (1) in Abhängigkeit von der mit der relativen Position verknüpften Position anzuzeigen, wobei das mindestens eine stereoskopische Bild ein Leuchtpiktogramm mit einer Warnfunktion bildet.

13. Warnverfahren nach dem vorhergehenden Anspruch, **dadurch gekennzeichnet, dass** es einen Schritt des Bestimmens der Entfernung, die das detektierte sekundäre Kraftfahrzeug (400) von dem Hauptkraftfahrzeug (300) trennt, umfasst, wobei das Anzeigen des mindestens einen stereoskopischen Bildes in Abhängigkeit von der bestimmten Entfernung ausgeführt wird.

14. Warnverfahren nach dem vorhergehenden Anspruch, **dadurch gekennzeichnet, dass** mindestens ein Maß des von der Leuchtvorrichtung (100) angezeigten stereoskopischen Bildes proportional zu der Entfernung ist, die das detektierte sekundäre Kraftfahrzeug (400) von dem Hauptkraftfahrzeug (300) trennt.

15. Kraftfahrzeug, das mit einem Warnleuchtsystem (1) nach einem der Ansprüche 1 bis 11 ausgerüstet ist und/oder Mittel umfasst, die dazu eingerichtet sind, ein Warnverfahren nach einem der Ansprüche 12 bis 14 zu implementieren.

## Claims

1. Luminous warning system (1) for a primary automotive vehicle, said luminous warning system (1) comprising:
- a detection system (200) for computing the relative position with respect to the primary automotive vehicle of at least one secondary automotive vehicle (400) and for transmitting relative-position-related information;
- a display surface (350) located on a surface intended to form an outer surface of the primary automotive vehicle (300);
- a luminous device (100) for displaying at least one stereoscopic image on the corresponding display surface (350), the stereoscopic image forming at least one luminous pictogram with a warning function; and
- a control module (310) for receiving the relative-position-related information transmitted by the detection system (200) and for configuring the luminous device (100), and the stereoscopic image that it displays, depending on this relative-position-related information;
- a processing unit configured to compute the distance separating the primary automotive vehicle (300) from the secondary automotive vehicle (400),
in which system said luminous device (100) comprises:
- at least one light source (40) configured to be able to emit at least one light beam;
- at least one luminous cell (10), each luminous cell (10) comprising:
∘ a waveguide (17) arranged to transport at least part of the at least one light beam emitted by the corresponding light source (40) between a first end located on the side of the light source (40) and a second end;
∘ at least one diffraction grating (13-15) located at the second end of the waveguide (17), at least some of the diffraction gratings (13-15) being illuminated by at least some of the light beams transported by the waveguide (17) in order to generate at least one diffraction lobe,
**characterized in that** the control module (310) that configures the luminous device (100) is then capable of receiving distance and/or position information, in order to be able to generate dynamic stereoscopic images, the content and/or appearance of which is variable and depends on the position and/or distance of the secondary automotive vehicle (400) with respect to the primary automotive vehicle (300).

2. Luminous warning system (1) according to Claim 1, **characterized in that** the luminous device (100) comprises a collimator (50) arranged to optically couple the at least one light source (40) to the waveguide (17).

3. Luminous warning system (1) according to either of Claims 1 and 2, **characterized in that** a first diffraction grating (13-15) has first dimensional characteristics and a second diffraction grating (13-15) has second dimensional characteristics different from the first dimensional characteristics, so that different diffraction lobes are generated when said diffraction gratings are illuminated by the at least one light beam.

4. Luminous warning system (1) according to the preceding claim, **characterized in that** the first diffraction grating (13-15) and the second diffraction grating (13-15) are orientated in different directions.

5. Luminous warning system (1) according to any of Claims 1 to 4, **characterized in that** the at least one light source (40) is of the type of a laser source or a light-emitting diode.

6. Luminous warning system (1) according to the preceding claim, **characterized in that** the at least one light source (40) comprises:
- a first light source (40) emitting at least one light beam of a first colour;
- a second light source (40) emitting at least one light beam of a second colour;
- a third light source (40) emitting at least one light beam of a third colour.

7. Luminous warning system (1) according to any of the preceding claims, **characterized in that** the luminous device (100) comprises an optical multiplexing means arranged to selectively illuminate each luminous cell (10).

8. Luminous warning system (1) according to any of the preceding claims, **characterized in that** the luminous device (100) comprises an optical shutter (30) located plumb with at least some of the luminous cells, said optical shutter (30) being configurable into a first configuration in which the stereoscopic images formed by the one or more corresponding luminous cells are transmitted through said optical shutter (30), and a second configuration in which the stereoscopic images formed by the one or more corresponding luminous cells are absorbed by said optical shutter (30).

9. Luminous warning system (1) according to any of the preceding claims, **characterized in that** the display surface (350) is chosen from:
- a back window of the primary automotive vehicle (300); and/or
- a side window of the primary automotive vehicle (300); and/or
- a windscreen of the primary automotive vehicle (300); and/or
- part of the body of the primary automotive vehicle (300).

10. Luminous warning system (1) according to any of the preceding claims, **characterized in that** it comprises a processing unit configured to compute at least a distance separating the primary automotive vehicle (300) from the detected secondary automotive vehicle (400), the control module (310) being configured to drive the luminous device (100) in order to generate at least one stereoscopic image depending on the computed distance.

11. Luminous warning system (1) according to the preceding claim, **characterized in that** the detection system (200) and/or processing unit and/or control module (310) are configured to detect the secondary automotive vehicle (400), to compute the distance (d) and to drive the luminous device (100) in real time, respectively.

12. Luminous warning method for an automotive vehicle, said method being implemented by a luminous warning system (1) according to any of the preceding claims and comprising the following steps:
- detection of the relative position with respect to the primary automotive vehicle of a secondary automotive vehicle (400) by means of a detection system (200);
- transmission by the detection system of information, related to this relative position, to a control module;
- configuration of the luminous device (100) by the control module (310) in order to display at least one stereoscopic image on a display surface (350) of the luminous warning system (1) depending on the relative-position-related information, the at least one stereoscopic image forming a luminous pictogram with a warning function.

13. Warning method according to the preceding claim, **characterized in that** it comprises a step of determining the distance separating the detected secondary automotive vehicle (400) from the primary automotive vehicle (300), the at least one stereoscopic image being displayed depending on the determined distance.

14. Warning method according to the preceding claim, **characterized in that** at least one dimension of the stereoscopic image displayed by the luminous device (100) is proportional to the distance separating the detected secondary automotive vehicle (400) from the primary automotive vehicle (300).

15. Automotive vehicle equipped with a luminous warning system (1) according to any of Claims 1 to 11 and/or comprising means arranged to implement a warning method according to any of Claims 12 to 14.
